# EUROPEAN PATENT SPECIFICATION

(11) **EP 3 638 585 B1**
(45) Date of publication and mention of the grant of the patent: **15.05.2024**
(21) Application number: 18818609.2
(22) Date of filing: 06.06.2018
(51) Int. Cl.: B64U 10/13, B64U 70/20, F42B 12/36, B60L 53/80, B60L 50/64, B64C 39/02, B64D 5/00

(54) **SYSTEM AND METHOD FOR LAUNCHING AN UNMANNED AERIAL VEHICLE**
SYSTEM UND VERFAHREN ZUM STARTEN EINES UNBEMANNTEN LUFTFAHRZEUGS
SYSTÈME ET MÉTHODE DE LANCEMENT D'UN VÉHICULE AÉRIEN SANS PILOTE

(30) Priority: 11.06.2017 IL 25280817
(43) Date of publication of application: 22.04.2020
(73) Proprietor: Spear U.A.V Ltd, 6927605 Tel Aviv (IL)
(72) Inventor: KUPERMAN, Gedalia, 6927605 Tel Aviv (IL)
(74) Representative: Vossius & Partner Patentanwälte Rechtsanwälte mbB
(86) International application number: PCT/IL2018/050614
(87) International publication number: WO 2018/229747

(56) References cited:
- GB-A- 2 205 798
- US-A1- 2006 011 777
- US-A1- 2014 117 147
- US-A1- 2015 266 578
- US-A1- 2016 347 476
- US-A1- 2017 057 635
- US-B1- 9 527 596

## Description

### FIELD OF THE INVENTION

The present invention generally relates to Unmanned Aerial Vehicles (UAV) and specifically to long distance launched UAVs. In particular, the invention relates to a system and a method for launching an unmanned aerial vehicle.

### BACKGROUND

Conventional land-launched Unmanned Aerial Vehicles (UAVs) are used for various purposes, as a hobby or for operational missions such as delivery, surveillance, observation, etc. The everlasting problem with existing UAVs such as multi rotor copters or drones is that they have a limited range of operation due to their limited power capacities leading to a relatively short flight time thus, when a UAV is intended to perform a long distance operation, the UAVs battery cannot provide the necessary flight time.

Conventional, land-launched UAVs have limited endurance capabilities in accordance with their limited power capacities.

Arrival time for distant targets (at a range of several kilometers) using conventional UAVs may be very long, while the usage of a UAV that is launched from a "carrier" significantly reduces the arrival time.

Therefore, there is a need for a UAV that can be launched to a long distance location whereby it is released to perform its mission.

US 9 527 596 B1 discloses a remotely controlled UAV. The UAV includes a parachute, with a cylindrical power and control module suspended vertically below the parachute. In one embodiment, a propulsion source is mounted on top of the power and control module with control lines connected to the module below the propulsion source, and in another embodiment the power and control module is suspended from a point above a propulsion source. The UAV may be flown under a parachute and guided by remote control, or the control module (fuselage) may be released from the parachute and extendable fixed wings deployed to enable the UAV to be flown as a fixed wing vehicle.

### SUMMARY

According to an aspect of the present invention there is provided a system for launching an Unmanned Aerial Vehicle (UAV) as defined in independent claim 1.

The carrier may be selected from the group consisting of glider bombs, rockets, RPV (remote-piloted vehicle), UAVs and mortar shells.

The capsule may be shaped according to the UAV's contour.

The inner side of the capsule may further comprise supports configured to tightly hold the UAV.

The carrier's speed may be substantially zero and the carrier's angle may be between 70 to 90 degrees relative to the ground.

The capsule may further comprise springs mounted between the at least two capsule's parts; the springs configured to assist the capsule to split.

The UAV may be a drone comprising at least two arms.

Each arm may comprise an engine controller and a propeller.

Each arm may comprise at least one spring configured to unfold its respective arm upon release from the capsule.

The at least one spring may be disposable and configured to be discarded upon unfolding of its respective arm.

The UAV may comprise at least one battery; wherein at least one of the at least one battery may be a detachable battery.

The detachable battery may comprise a physical connector and electrical connectors; and wherein the UAV may further comprise a battery release mechanism and electrical connectors; the battery's electrical connectors configured to be connected to the UAV's electrical connectors; the physical connector configured to be connected to the battery release mechanism; and wherein the battery release mechanism may be configured to release the physical connector upon a signal indicating that the detachable battery should be discarded.

The physical connector may be a screw and the battery release mechanism may be a servo motor; and wherein the servo motor may be configured to rotate and release the screw.

The battery may further comprise at least one socket configured to press at least one spring against the UAV; the at least one spring may be configured to assist in releasing of the battery.

The battery release mechanism may be one of a pyrotechnic mechanism and a mechanical mechanism.

According to another aspect of the present invention there is provided a method of launching an Unmanned Aerial Vehicle (UAV) as defined in independent claim 6

The carrier may be selected from the group consisting of glider bombs, rockets, RPV (remote-piloted vehicle), UAVs and mortar shells.

The capsule may be shaped according to the UAV's contour.

The inner side of the capsule may further comprise supports configured to tightly hold the UAV.

The carrier's speed may be substantially zero and the carrier's angle may be between 70 to 90 degrees relative to the ground.

The capsule may further comprise springs mounted between the at least two capsule's parts; the springs configured to assist the capsule to split.

The UAV may be a drone comprising at least two arms.

Each arm may comprise an engine controller and a propeller.

Each arm may comprise at least one spring and wherein the unfolding comprises using the at least one spring for unfolding the respective arm upon the releasing from the capsule.

The at least one spring may be disposable and the method may further comprise discarding the at least one spring upon unfolding of its respective arm.

The UAV may comprise at least one battery; wherein at least one of the at least one battery may be a detachable battery.

The detachable battery may comprise a physical connector and electrical connectors; and wherein the UAV may further comprise a battery release mechanism and electrical connectors; the battery's electrical connectors are connected to the UAV's electrical connectors; the physical connector is connected to the battery release mechanism; and wherein the method may further comprise releasing, by the battery release mechanism, the physical connector upon a signal indicating that the detachable battery should be discarded.

The physical connector may be a screw and the battery release mechanism may be a servo motor; and wherein the releasing may comprise rotating the servo motor and releasing the screw.

The battery may further comprise at least one socket configured to press at least one spring against the UAV; the method may further comprise assisting, by the at least one spring, in the releasing of the battery.

The battery release mechanism may be one of a pyrotechnic mechanism and a mechanical mechanism.

### BRIEF DESCRIPTION OF THE DRAWINGS

For better understanding of the invention and to show how the same may be carried into effect, reference will now be made, purely by way of example, to the accompanying drawings.

With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice. In the accompanying drawings:
Fig. 1 is a schematic view of an exemplary carrier encompassing the UAV's capsule according to embodiments of the present invention;
Fig. 2 is an exploded view of Fig. 1;
Fig. 3 is an exploded view of the capsule encompassing the UAV according to embodiments of the present invention;
Fig. 4 is a schematic view of the UAV's deployment process according to embodiments of the present invention;
Figs. 5A and 5B are schematic top and bottom perspective views of an exemplary UAV according to embodiments of the present invention;
Fig. 5C is a side view of the exemplary UAV of Figs. 5A and 5B according to embodiments of the present invention;
Fig.6 is an enlargement of the front end of the UAV of Figs. 5A and 5B according to embodiments of the present invention; and
Fig. 7 is a schematic view of an exemplary detachable battery according to embodiments of the present invention.

### DETAILED DESCRIPTION OF PREFERRED EMBODIMENTS

Before explaining at least one embodiment of the invention in detail, it is to be understood that the invention is not limited in its application to the details of construction and the arrangement of the components set forth in the following description or illustrated in the drawings. The invention is applicable to other embodiments or of being practiced or carried out in various ways. Also, it is to be understood that the phraseology and terminology employed herein is for the purpose of description and should not be regarded as limiting.

The present invention provides a UAV (Unmanned Aerial Vehicles) that can be launched for long-distance missions from land, sea and air, using an aerial carrier such as standardized launchers, glider bombs, UAVs, rockets, RPV (remote-piloted vehicle), mortar shells, etc. The UAV's dimensions allow for it to be contained, in a folded state, within the inner chamber of the carrier that can be launched to a point of interest in far-off airspace. When the carrier reaches optimal release conditions, the UAV is released, separates from its carrier, unfolds and executes its mission. Upon the conclusion of its mission, the UAV may either destroy itself, land at a predefined rendezvous point or be directed by an operator.

The present invention's UAVs may be intended to carry out a variety of missions, such as tracking moving targets, night reconnaissance, relaying communications and data, laser designation, measuring atmospheric conditions, search and rescue and more.

Since time is saved on the flight to targets, the UAVs provide a tactical solution for executing long range missions in minimal time, with maximum endurance and payload capabilities.

According to embodiments of the present invention, the UAV may be preprogrammed to perform a mission, guided from a distance or a combination of these two methods.

According to embodiments of the present invention, the UAV and all of its components are folded into a shape similar to a cylinder or a rectangle and may be covered by a hard enveloping "capsule" that is loaded into the carrier. The capsule may be shaped as a cylinder or a rectangle or may be shaped according to the UAVs contour. The capsule may be made from light and durable materials (e.g., PVC). The folded UAV is mounted inside the capsule which is loaded into the internal cavity of the carrier. The use of the capsule is intended to minimize environmental factors such as shocks, acceleration and vibration, and allow for smooth release of the UAV from the carrier.

It will be appreciated that the folded UAV's shape is not limited to a cylinder or a rectangle.

It will be appreciated that the capsule's shape is not limited to a cylinder or a rectangle. The carrier is launched to a desired aerial point, using the carrier's own navigational system. According to embodiments of the present invention, while the carrier is in flight, the UAV inside it activates its control and navigational system in order to reduce the awakening period following deployment, and in order to track navigational data prior to deployment. When the carrier reaches the desired aerial point, it executes vertical maneuvers in order to reduce its speed and create suitable conditions for the release of the capsule. According to embodiments of the present invention, the order to release the capsule from the carrier is given by the carrier's computer. Alternatively, the order to release the capsule may be given from the UAV to the carrier via communication means between the UAV and the carrier. The order may be given, for example, in a predetermined location, altitude, etc. or by an operator from a distance.

According to embodiments of the present invention, the capsule is ejected using a pyrotechnic mechanism installed in the carrier.

Following the ejection of the capsule from the carrier, the capsule splits into at least two parts, allowing the UAV to exit into the air. When deployed, the UAV unfolds and immediately activates its engines to avoid loss of altitude and vertical speed.

According to embodiments of the present invention, the capsule further includes a sealing layer (preferably at the rear end of the capsule) in order to create a sealed cavity between the pyrotechnic mechanism and the capsule, thus enabling the pressure created by the pyrotechnic mechanism to eject the capsule.

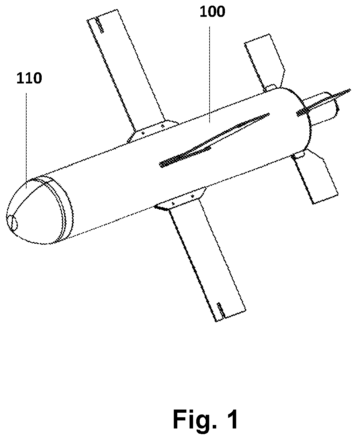

Fig. 1 is a schematic view of an exemplary carrier 100 encompassing the UAV's capsule 110 according to embodiments of the present invention.

It will be appreciated that the carrier of the present invention is not limited to the carrier shown in Figs. 1, 2 and 4.

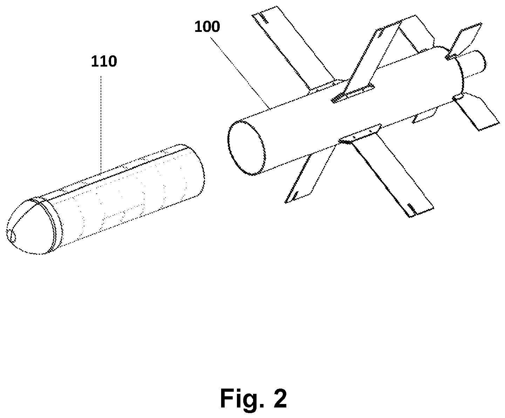

Fig. 2 is an exploded view of Fig. 1.

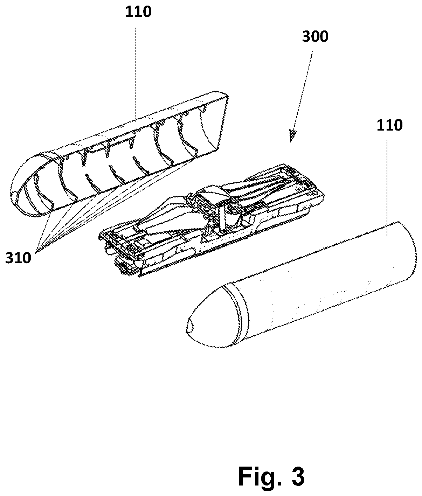

Fig. 3 is an exploded view of the capsule 110 encompassing the UAV 300.

For the purpose of explanation and demonstration the UAV hereinafter is presented as a quadcopter or a drone. It will be appreciated that the present invention is not limited to a quadcopter or a drone. According to embodiments of the present invention, the UAV may be any drone having at least two arms, a multi rotor copter, a counter rotor copter or any other aerial vehicle capable of being folded into a capsule.

According to embodiments of the present invention, the capsule 110 may include an inner shape or supports (such as supports 310) for tightly holding the UAV 300 in order to minimize environmental factors such as shocks, acceleration, vibration, etc.

According to embodiments of the present invention, springs may be mounted between the capsule parts for assisting the capsule to split.

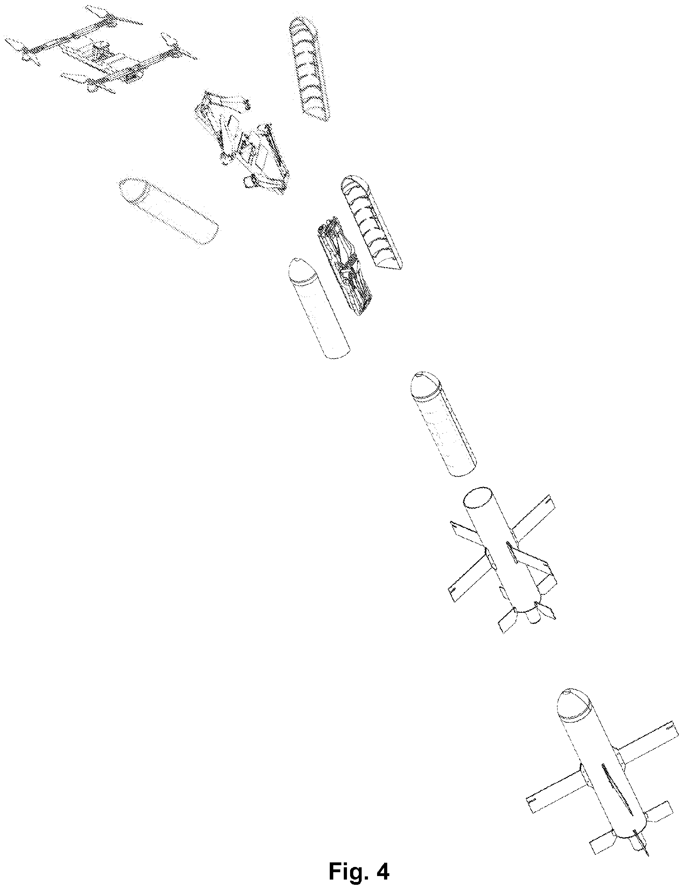

Fig. 4 is a schematic view of the UAV's deployment process according to embodiments of the present invention. According to embodiments of the present invention, in order to release the UAV at optimal conditions, when the carrier reaches the deployment destination point, the carrier maneuvers upwards in order to reduce speed and change its angle relative to the ground. The UAV is deployed according to predetermined values of speed and angle. For example, at low speed (substantially zero) and when the carrier is in 70-90 degrees relative to the ground.

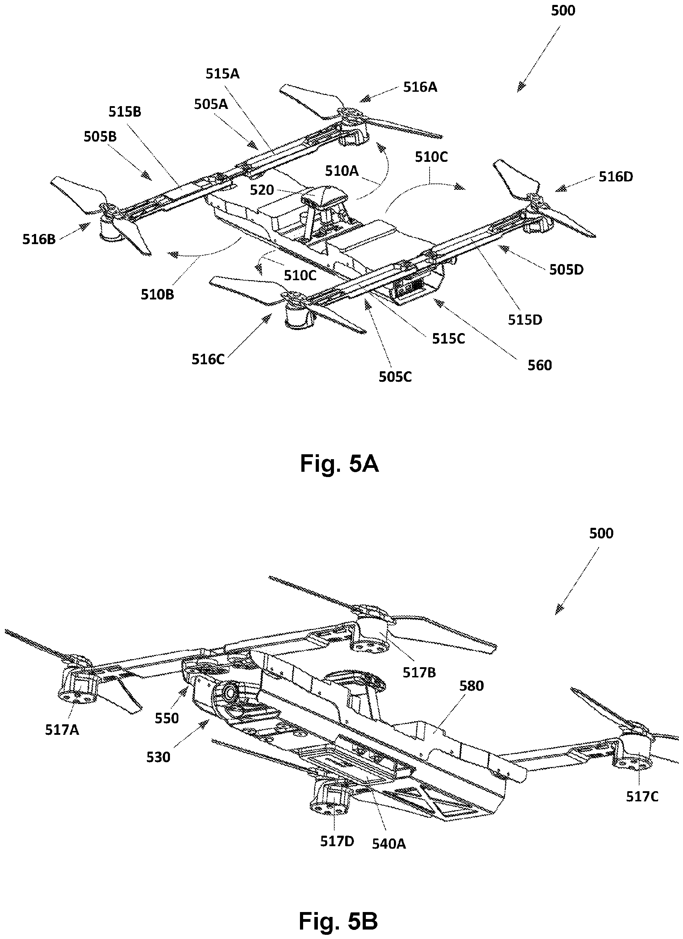

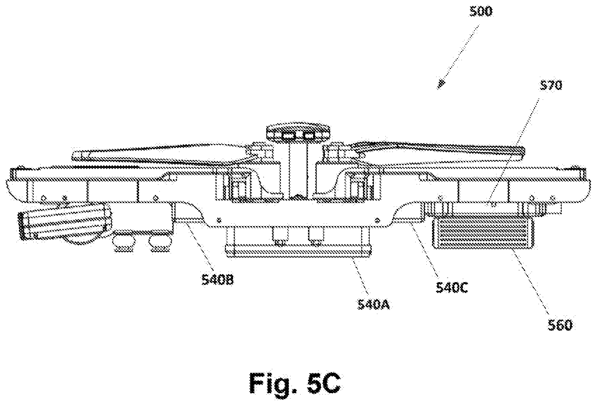

Figs. 5A and 5B are schematic top and bottom perspective views of an exemplary UAV 500 according to embodiments of the present invention. The UAV 500 comprises four arms 505A-505D, each intended to be opened in the direction of the respective arrow 510A-510D; each arm has an engine controller 515A-515D for controlling the respective engine 517A-517D and its propeller 516A-516D. The UAV 500 further comprises a GPS antenna 520; a capturing device 530 mounted on a support allowing stable movement of the capturing device (e.g., a camera mounted on a gimbal); at least one battery 540A; a transceiver 560 and a flight controller (shown in Fig. 5C).

According to embodiments of the present invention, the UAV 500 is surrounded by a frame 580.

Fig. 5C is a side view of the exemplary UAV 500 (without the frame 580) showing the transceiver 560, the flight controller 570, batteries 540A-540C (in this exemplary embodiment three are used) where, according to embodiments of the present invention, batteries 540B and 540C are fixed and battery 540A is detachable as will be detailed below. It will be appreciated that battery 540A may be fixed and batteries 540B and 540C may be detachable.

The flight controller of the present invention may be for example, Pixhawk, provided by PX4.

According to embodiments of the present invention, the arms 505A-505D may be opened by an actuator, by disposable springs or by springs such as springs 550 of Fig. 5B. In a case where springs are used, as long as the UAV is in the capsule, the arms are folded under the pressure of the capsule. When the capsule splits and the UAV is released, the springs open the arms. If the springs are disposable springs, they may be discarded as the arms open.

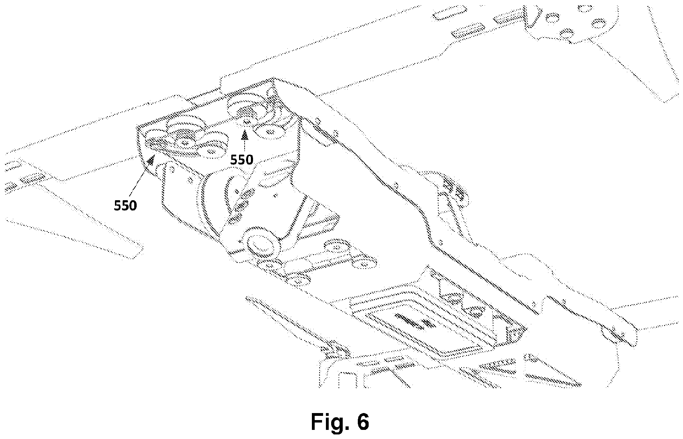

Fig.6 is an enlargement of the front end of the UAV 500 showing springs 550. According to embodiments of the present invention, the UAV (300, 500) starts its flight at hovering, until the GPS reception signal stabilizes.

Once the GPS signal stabilizes, the UAV begins executing its mission. There are three operational settings: autonomous (fora preloaded mission), real-time remote control, and a combination of the two.

As mentioned above, the UAV (300, 500) may include at least one battery. According to embodiments of the present invention, in order to extend the operating time of the UAV (300, 500), it may carry several batteries. Once the first battery's capacity is depleted, an additional battery is connected and the first battery may be ejected and discarded. In such a case, the UAV of the present invention further includes at least one power connection mechanism (equal to the number of the additional batteries) intended to electrically connect the next battery to be used before the depleted battery is discarded and maintain a continuous power supply to the UAV. The connection mechanism may be a mechanical mechanism which physically connects the next battery to be used upon a signal indicating that the currently used battery is about to be depleted; an electrical mechanism which enables an electrical connection of the UAV to the next battery to be used upon a signal indicating that the currently used battery is about to be depleted or any other mechanism capable of ensuring the electrical connection of the UAV to the next battery to be used before discarding the depleted battery.

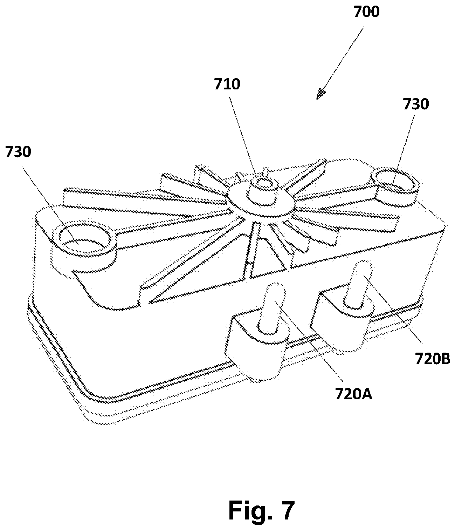

Fig. 7 is a schematic view of an exemplary detachable battery 700 comprising a pysical connector 710, electric connectors 720A and 720B and according to embodiment of the present invention, springs sockets 730 (two are shown). At least one spring (not shown) is intended to be held by the at least one socket 730 (two are shown) and pressed against the UAV body for quick release of the detachable battery 700. It will be appreciated that the battery 700 is not limited to include the sockets and springs.

A battery release mechanism e.g., a servo motor (not shown) connected to the UAV's body is intended to rotate and release the physical connector 710 (e.g., a screw) upon a signal indicating that the detachable battery should be discarded. When the screw 710 is released the battery 700 is detached and discarded. It will be appreciated that this mechanism may be used for discarding other items such as a package for example. It will be appreciated that more than one or none of the batteries may be detachable batteries. It will be appreciated that other release mechanisms may be used, such as, pyrotechnic mechanisms, mechanical mechanisms, etc.

It is important to maintain the center of gravity of the UAV thus, according to embodiments of the present invention, the detachable battery is located such that the center of gravity will be maintained when the depleted battery is discarded.

According to embodiments of the present invention, in a case where the detachable battery is not located in the center of gravity of the UAV, the UAV may further include at least one weight located such that the center of gravity is maintained thus, when the detachable battery is discarded, the respective weight(s) is discarded as well thus maintaining the center of gravity.

It will be appreciated that the carrier is presented as ejecting the capsule from its front end but the present invention is not limited to carriers that eject the capsule from their front end. According to embodiments of the invention, the capsule may be ejected from the bottom of the carrier, the rear end of the carrier, etc. depending on the carrier's type.

In an example not according to the claims, the UAV is not encapsulated inside the capsule described above and may be carried (or encompassed) inside the aerial carrier and ejected/released therefrom from the bottom of the carrier, the rear end of the carrier, etc. depending on the carrier's type. It will be appreciated that the carrier of the present invention may carry a plurality of UAVs and release them separately or all together. According to embodiments of the present invention, the carrier may comprise a plurality of release mechanisms, less or as the number of the UAVs.

It will be appreciated that the UAV of the present invention may be any drone having at least two arms, a multi rotor copter, a counter rotor copter or any other unmanned aerial vehicle capable of being folded and/or encapsulated and/or carried inside a carrier and/or connected to a carrier.

## Claims

1. A system for launching an Unmanned Aerial Vehicle (UAV), comprising:
a capsule comprising at least two parts;
a UAV configured to be encapsulated inside said capsule in a folded configuration; and
an aerial carrier comprising a release mechanism, said carrier configured to carry said capsule
said carrier further configured to be launched and eject said capsule upon arrival at a desired aerial location, using said release mechanism;
wherein prior to said ejection, said carrier is further configured to execute vertical maneuvers upwards in order to reduce said carrier's speed and change said carrier's angle thereby creating suitable conditions for said ejection; said capsule is configured to split and release said UAV upon being ejected;
wherein upon ejection from said carrier said UAV is being released from said capsule to allow its unfolding;
**characterised in that** said release mechanism is a pyrotechnic mechanism; and
**in that** said capsule further comprises a sealing layer configured to create a sealed cavity between said pyrotechnic mechanism and said capsule thereby enabling pressure created by said pyrotechnic mechanism to eject said capsule.

2. The system of claim 1, wherein said carrier is selected from the group consisting of glider bombs, rockets, RPV (remote-piloted vehicle), UAVs and mortar shells.

3. The system of claim 1, wherein said UAV comprises at least one battery; wherein at least one of said at least one battery is a detachable battery;
wherein said detachable battery comprises a physical connector and electrical connectors; and wherein said UAV further comprises a battery release mechanism and electrical connectors;
said battery's electrical connectors configured to be connected to said UAV's electrical connectors;
said physical connector configured to be connected to said battery release mechanism; and
wherein said battery release mechanism is configured to release said physical connector upon a signal indicating that the detachable battery should be discarded.

4. The system of claim 3, wherein said battery release mechanism is one of a pyrotechnic mechanism and a mechanical mechanism.

5. The system of claim 1, wherein said UAV comprises at least two arms; wherein each arm comprises at least one spring configured to unfold its respective arm upon release from said capsule.

6. A method of launching an Unmanned Aerial Vehicle (UAV), comprising:
launching an aerial carrier comprising a capsule and a release mechanism;
said capsule comprises at least two parts and configured to encapsulate a UAV in a folded configuration;
executing, by said carrier, vertical maneuvers upwards in order to reduce said carrier's speed and change said carrier's angle thereby creating suitable conditions for ejecting said capsule;
ejecting said capsule upon arrival at a desired aerial location, using said release mechanism;
splitting said capsule and releasing said UAV upon said ejecting; and
unfolding said folded UAV upon said releasing;
**characterised in that** said release mechanism is a pyrotechnic mechanism; and
**in that** said capsule further comprises a sealing layer configured to create a sealed cavity between said pyrotechnic mechanism and said capsule thereby enabling pressure created by said pyrotechnic mechanism to eject said capsule.

7. The method of claim 6, wherein said carrier is selected from the group consisting of glider bombs, rockets, RPV (remote-piloted vehicle), UAVs and mortar shells.

8. The method of claim 6, further comprising:
releasing, by a battery release mechanism, a physical connector and electrical connectors connecting at least one detachable battery to said UAV, upon a signal indicating that the detachable battery should be discarded, thereby discarding said at least one detachable battery.

9. The method of claim 6, wherein said UAV comprises at least two arms; wherein each arm comprises at least one spring and wherein said unfolding comprises using said at least one spring for unfolding the respective arm upon said releasing from said capsule.

## Patentansprüche

1. System zum Starten eines unbemannten Luftfahrzeugs (UAV), das aufweist:
eine Kapsel, die mindestens zwei Teile aufweist;
ein UAV, das konfiguriert ist, innerhalb der Kapsel in einer gefalteten Konfiguration eingekapselt zu werden; und
einen Flugträger, der einen Freigabemechanismus aufweist, wobei der Träger konfiguriert ist, die Kapsel zu tragen;
wobei der Träger ferner konfiguriert ist, gestartet zu werden und die Kapsel bei Ankunft an einem gewünschten Ort in der Luft unter Verwendung des Freigabemechanismus auszustoßen;
wobei vor dem Ausstoßen ferner der Träger konfiguriert ist, vertikale Manöver nach oben auszuführen, um die Geschwindigkeit des Trägers zu verringern und den Winkel des Trägers zu ändern, wodurch geeignete Bedingungen für das Ausstoßen geschaffen werden; wobei die Kapsel konfiguriert ist, sich zu teilen und das UAV beim Ausstoßen freizugeben;
wobei beim Ausstoßen aus dem Träger das UAV von der Kapsel freigegeben wird, um seine Entfaltung zu ermöglichen;
**dadurch gekennzeichnet, dass** der Freigabemechanismus ein pyrotechnischer Mechanismus ist;
und
dass die Kapsel ferner eine Dichtungsschicht aufweist, die konfiguriert ist, einen abgedichteten Hohlraum zwischen dem pyrotechnischen Mechanismus und der Kapsel zu erzeugen, wodurch es ermöglicht wird, dass der durch den pyrotechnischen Mechanismus erzeugte Druck die Kapsel ausstößt.

2. System nach Anspruch 1, wobei der Träger aus der Gruppe ausgewählt ist, die aus Segelflugbomben, Raketen, ferngelenkten Fahrzeugen (RPV), UAVs und Mörsergranaten besteht.

3. System nach Anspruch 1, wobei das UAV mindestens eine Batterie aufweist; wobei mindestens eine der mindestens einen Batterie eine abtrennbare Batterie ist;
wobei die abtrennbare Batterie einen physischen Verbinder und elektrische Verbinder aufweist; und wobei das UAV ferner einen Batteriefreigabemechanismus und elektrische Verbinder aufweist;
wobei die elektrischen Verbinder der Batterie konfiguriert sind, mit den elektrischen Verbindern des UAV verbunden zu werden;
wobei der physische Verbinder, konfiguriert ist, mit dem Batteriefreigabemechanismus verbunden zu werden; und
wobei der Batteriefreigabemechanismus konfiguriert ist, er den physischen Verbinder auf ein Signal hin zu lösen, das anzeigt, dass die abtrennbare Batterie abgeworfen werden sollte.

4. System nach Anspruch 3, wobei der Batteriefreigabemechanismus entweder ein pyrotechnischer Mechanismus oder ein mechanischer Mechanismus ist.

5. System nach Anspruch 1, wobei das UAV mindestens zwei Arme aufweist; wobei jeder Arm mindestens eine Feder aufweist, die konfiguriert ist, ihren jeweiligen Arm bei der Freigabe aus der Kapsel auszuklappen.

6. Verfahren zum Starten eines unbemannten Luftfahrzeugs (UAV), das aufweist:
Starten eines Flugträgers, der eine Kapsel und einen Freigabemechanismus aufweist;
wobei die Kapsel mindestens zwei Teile aufweist und konfiguriert ist, ein UAV in einer gefalteten Konfiguration einzukapseln;
Ausführen durch den Träger von vertikalen Manövern nach oben, um die Geschwindigkeit des Trägers zu verringern und den Winkel des Trägers zu ändern, wodurch geeignete Bedingungen für das Ausstoßen der Kapsel geschaffen werden;
Ausstoßen der Kapsel bei Ankunft an einem gewünschten Ort in der Luft unter Verwendung des Freigabemechanismus;
Teilen der Kapsel und Freigeben des UAV nach dem Ausstoßen; und
Entfalten des gefalteten UAV nach dem Freigeben;
**dadurch gekennzeichnet, dass**
der Freigabemechanismus ein pyrotechnischer Mechanismus ist;
und
dass die Kapsel ferner eine Dichtungsschicht aufweist, die konfiguriert ist, einen abgedichteten Hohlraum zwischen dem pyrotechnischen Mechanismus und der Kapsel zu erzeugen, wodurch es ermöglicht wird, dass der durch den pyrotechnischen Mechanismus erzeugte Druck die Kapsel ausstößt.

7. Verfahren nach Anspruch 6, wobei der Träger aus der Gruppe ausgewählt ist, die aus Gleitbomben, Raketen, RPV (ferngelenkten Fahrzeugen), UAVs und Mörsergranaten besteht.

8. Verfahren nach Anspruch 6, das ferner aufweist:
Lösen durch einen Batteriefreigabemechanismus eines physischen Verbinders und elektrischer Verbinder, die mindestens eine abtrennbare Batterie mit dem UAV verbinden, auf ein Signal hin, das anzeigt, dass die abtrennbare Batterie abgeworfen werden sollte, wodurch die mindestens eine abtrennbare Batterie abgeworfen wird.

9. Verfahren nach Anspruch 6, wobei das UAV mindestens zwei Arme aufweist; wobei jeder Arm mindestens eine Feder aufweist und wobei das Entfalten das Verwenden der mindestens einen Feder zum Ausklappen des jeweiligen Arms beim Freibeben aus der Kapsel aufweist.

## Revendications

1. Système pour le lancement d'un véhicule aérien sans pilote (UAV), comprenant :
une capsule comprenant au moins deux parties ;
un UAV configuré de manière à être encapsulé à l'intérieur de ladite capsule dans une configuration pliée ; et un transporteur aérien comprenant un mécanisme de libération,
ledit transporteur étant configuré pour transporter ladite capsule ledit transporteur étant configuré en outre de manière à être lancé et à éjecter ladite capsule lors de l'arrivée à un emplacement aérien souhaité par le biais dudit mécanisme de libération ;
dans lequel avant ladite éjection, ledit transporteur est en outre configuré pour exécuter des manoeuvres verticales vers le haut afin de réduire la vitesse dudit transporteur et de changer l'angle dudit transporteur, créant ainsi des conditions adaptées pour ladite éjection ; ladite capsule étant configurée pour s'ouvrir et libérer ledit UAV lors de son éjection ;
dans lequel lors de l'éjection hors dudit transporteur, ledit UAV est libéré de ladite capsule afin de permettre son déploiement ;
**caractérisé en ce que** ledit mécanisme de libération est un mécanisme pyrotechnique ;
et
**en ce que** ladite capsule comprend en outre une couche d'étanchéité configurée pour créer une cavité étanche entre ledit mécanisme pyrotechnique et ladite capsule, permettant ainsi à la pression créée par ledit mécanisme pyrotechnique d'éjecter ladite capsule.

2. Système selon la revendication 1, dans lequel ledit transporteur est sélectionné dans le groupe consistant de bombes planantes, de fusées, de véhicules pilotés à distance (RPV), d'UAV et d'obus de mortiers.

3. Système selon la revendication 1, dans lequel ledit UAV comprend au moins une batterie ; au moins une desdites au moins une batterie étant une batterie amovible ;
dans lequel ladite batterie amovible comprend un connecteur physique et des connecteurs électriques ;
et dans lequel ledit UAV comprend en outre un mécanisme de libération de batterie et des connecteurs électriques ;
lesdits connecteurs électriques de la batterie étant configurés de manière à être connectés auxdits connecteurs électriques de l'UAV ;
lesdits connecteurs physiques étant configurés de manière à être connectés audit mécanisme de libération de batterie ;
et
dans lequel ledit mécanisme de libération de batterie est configuré pour libérer ledit connecteur physique lors d'un signal indiquant que la batterie amovible doit être mise au rebut.

4. Système selon la revendication 3, dans lequel ledit mécanisme de libération de batterie est soit un mécanisme pyrotechnique, soit un mécanisme mécanique.

5. Système selon la revendication 1, dans lequel ledit UAV comprend au moins deux bras ; chaque bras comprenant au moins un ressort configuré pour déployer son bras respectif lors de la libération de ladite capsule.

6. Procédé de lancement d'un véhicule aérien sans pilote (UAV), comprenant :
le lancement d'un transporteur aérien comprenant une capsule et un mécanisme de libération ;
ladite capsule comprenant au moins deux parties et étant configurée pour encapsuler un UAV dans une configuration pliée ;
l'exécution, par ledit transporteur, de manoeuvres verticales vers le haut afin de réduire la vitesse dudit transporteur et de changer l'angle dudit transporteur, créant ainsi des conditions adaptées pour l'éjection de ladite capsule ;
l'éjection de ladite capsule lors de l'arrivée à un emplacement aérien souhaité par le biais dudit mécanisme de libération ;
l'ouverture de ladite capsule et la libération dudit UAV lors de ladite éjection ; et
le déploiement dudit UAV plié lors de ladite libération ;
**caractérisé en ce que**
ledit mécanisme de libération est un mécanisme pyrotechnique ;
et
**en ce que** ladite capsule comprend en outre une couche d'étanchéité configurée pour créer une cavité étanche entre ledit mécanisme pyrotechnique et ladite capsule, permettant ainsi à la pression créée par ledit mécanisme pyrotechnique d'éjecter ladite capsule.

7. Procédé selon la revendication 6, dans lequel ledit transporteur est sélectionné parmi le groupe consistant de bombes planantes, de fusées, de véhicules pilotés à distance (RPV), d'UAV et d'obus de mortiers.

8. Procédé selon la revendication 6, comprenant en outre :
la libération, par un mécanisme de libération de batterie, d'un connecteur physique et de connecteurs électriques connectant au moins une batterie amovible audit UAV lors d'un signal indiquant que la batterie amovible doit être mise au rebut, mettant ainsi au rebut ladite au moins une batterie amovible.

9. Procédé selon la revendication 6, dans lequel ledit UAV comprend au moins deux bras ; chaque bras comprenant au moins un ressort, et dans lequel ledit déploiement comprend l'utilisation dudit au moins un ressort pour déployer le bras respectif lors de ladite libération de ladite capsule.
